# EUROPEAN PATENT APPLICATION

(11) **EP 0 835 770 A1**
(43) Date of publication of application: **15.04.1998**
(21) Application number: 97402375.6
(22) Date of filing: 09.10.1997
(51) Int. Cl.: B60C 27/10

(54) **Anti-skid device for a vehicular wheel**

(30) Priority: 11.10.1996 KR 9646117
(71) Applicant: Hong, Jae Gu, Dong-Gu, Taegu (KR)
(72) Inventor: Hong, Jae Gu, Dong-Gu, Taegu (KR)
(74) Representative: Lemoine, Robert

(57) **Abstract**

An anti-skid device for a vehicular wheel having a snow chain and an apparatus for detachably mounting the chain on a vehicular tire. The apparatus includes a plurality of hooking elements coupled to the chain in a detachable manner, a plurality of pulling members, connected with the hook elements in a non-detachable manner, for simultaneously drawing the hooking element towards the rotation axis of the wheel, winding gears (15,101,105,20,120) for applying the pulling members to tension by their clockwise and counter clockwise rotations to draw the pulling member, and locking mechanism in recess (35), engaged with the winding gears, operable to control the rotating direction of the winding gears, for preventing the winding gears from reverse rotating so that the applied tension is not released from the pulling member.

## Description

### BACKGROUND OF THE INVENTION

### 1. Field of the Invention

This invention relates to an anti-skid device for a vehicular wheel, and more particularly to an anti-skid device comprising a snow chain disposed around an outer circumferential portion of a vehicular wheel and an apparatus for detachably mounting the snow chain.

### 2. Description of the Prior Art

Such an anti-skid device is described in Korean Utility Model Laid-Open Nos. 95-13708 and 95-24771, and U.S. Patent Nos. 4,799,522, 4,854,359, 4,922,982 and 5,033,522. There is one problem-that the device in the prior art has a large dimensions. For this reason, it is not sufficient for the device in the prior art to act as a portable device for any emergencies, for example when we have suddenly heavy snow during a driving.

To date, the anti-skid device for a vehicular wheel has been well known as well as considerably improved in the art. As already known, the device has been generally developed not only for small size vehicles, such as saloons, hatchbacks, coups or station wagons but also for large size vehicles, such as buses, vans or trucks. The latter has however a relatively difficult solution compared to the former. Furthermore, in case of the large vehicle, due to its self-weight, a heavy load acts on a snow chain mounted on a wheel, and thus it has a high possibility to destroy the mounted chain while driving. Moreover, the large vehicle has to be provided with at least same or stronger fastening force compared to the small vehicle to reliably support the snow chain due to its wheel dimensions. On the other hand, there is a common problem that it takes much time to mount snow chain in small and large size vehicles.

### SUMMARY OF THE INVENTION

Thus, to address all of the above-mentioned problems, a principal object of the present invention is to provide an anti-skid device which can mount a snow chain on a vehicular wheel in a simple and easy way.

An object of this invention is to provide an anti-skid device wherein a plurality of pulling members are simultaneously drawn via respective hook elements towards the rotation axis of a vehicular wheel, and are of a circular or rectangular cross section braided or textured by a plurality of strands of aluminum alloy, steel, reinforced fiber etc.

A further object of this invention is to provide an anti-skid device wherein winding means is simultaneously rotated clockwise and counter clockwise to uniformly apply tension to or release tension from the pulling members, and in particular when the applied tension is released from the pulling members the device is prevented from springing out suddenly because the tension applied to the pulling members is simultaneously decreased in both directions at a constant speed.

A still further object of this invention is to provide an anti-skid device wherein the locking mechanism prevents the winding means from rotating in reverse so that the tension applied by rotation of the winding means is not released from the pulling members, and thus forces the winding means to be rotated in one direction while or after the tension is applied to the pulling members, but to be rotated in any direction when the tension is released from the pulling members.

A further object of this invention is to provide an anti-skid device wherein a resilient member imparts a resilient recovery force to the winding means connected with the pulling members, and thus causes the pulling members to be always reeled into the apparatus for mounting the chain and to keep the shortest distance between the snow chain and the apparatus for mounting the chain, and thereby decreases the time spent on mounting the chain on a vehicular tire.

According to the present invention, to achieve above mentioned various objects it is desirable for the invention to provide an apparatus for mounting a snow chain comprising a plurality of hook elements coupled to the chain in a detachable manner; a plurality of pulling members, connected with the hook elements in a non-detachable manner, for drawing the hook elements towards the rotation axis of the wheel; winding means, connected with the respective pulling members, for applying tension to the pulling members by its clockwise and counter clockwise rotation to draw the pulling members; and locking mechanism, engaged with the winding means, operable to control the rotating direction of the winding means, for preventing the winding means from reversely rotating so that the applied tension is not released from the pulling members.

It is preferred that the pulling members are of a circular or rectangular cross section braided or textured by a plurality of strands of aluminum alloy, steel, reinforced fiber etc. The pulling members have also both ends greater than the body in a cross-sectional dimensions.

The winding means comprises a first winding gearing member connected with one end of the pulling members and a second winding gearing member connected with the other end of the pulling members, and further comprises gearing means for transmitting the rotating force of the first winding gearing member to the second winding gearing member.

The gearing means comprises a first gearing member internally engaged with the first winding gearing member, a second gearing member internally engaged with the second winding gearing member, first and second central gearing members externally engaged with each other and disposed between the first gearing member and the second gearing member, a first shaft respectively fitted with the central portion of the first gearing member and of the first central gearing member, and a second shaft respectively fitted with the central portion of the second gearing member and of the second central gearing member. Furthermore, the gearing means comprises a first gearing member internally engaged with the first winding gearing member, a second gearing member internally engaged with the second winding gearing member, first and second shafts respectively fitted with the central portions of the first gearing member and the second gearing member, a first side gearing member externally engaged with the first gearing member, and a second side gearing member externally engaged with the second gearing member, the first and second side gearing members are externally engaged with each other and have an engaging portion whose height is substantially the same as the height of an engaging portion of the first gearing member plus the height of the second gearing member.

Related further objects and advantages of the present invention will be apparent from the following description.

### BRIEF DESCRIPTION OF THE DRAWINGS

The above objects, other features, and advantages of the invention will become apparent by describing the preferred embodiments thereof with reference to the accompanying drawings, in which:

Fig. 1 is a top view of an anti-skid device according to the invention, in particular of a mounting apparatus for a snow chain.

Fig. 2 is a cross sectional view taken on line 2-2 of Fig. 1.

Fig. 3 is a schematically exploded perspective view of a mounting apparatus for a snow chain according to the invention.

Fig. 4 is a schematically enlarged perspective view of a pair of spline shafts, manual driving member and a pair of spiral springs.

Fig. 5 is a schematically exploded perspective view of the locking mechanism for preventing winding means from reversely rotating so that tension applied to a plurality of pulling members should not released.

Fig. 6 shows a snow chain disposed around an outer circumferential portion of a vehicular wheel and a mounting apparatus for the chain which is mounted to the chain.

Fig. 7 is a view for explaining the operation relationship of the locking mechanism in Fig. 5, and shows a cross-sectional view taken on line 7-7 in Fig. 2.

Fig. 8 is a schematically enlarged perspective view of an alternative locking mechanism.

Fig. 9 is a plan view of an alternative embodiment of the locking mechanism in a locking condition.

Fig. 10 is a plan view of an alternative embodiment of the locking mechanism in a unlocking condition.

### DETAILED DESCRIPTION OF THE PREFERRED EMBODIMENTS

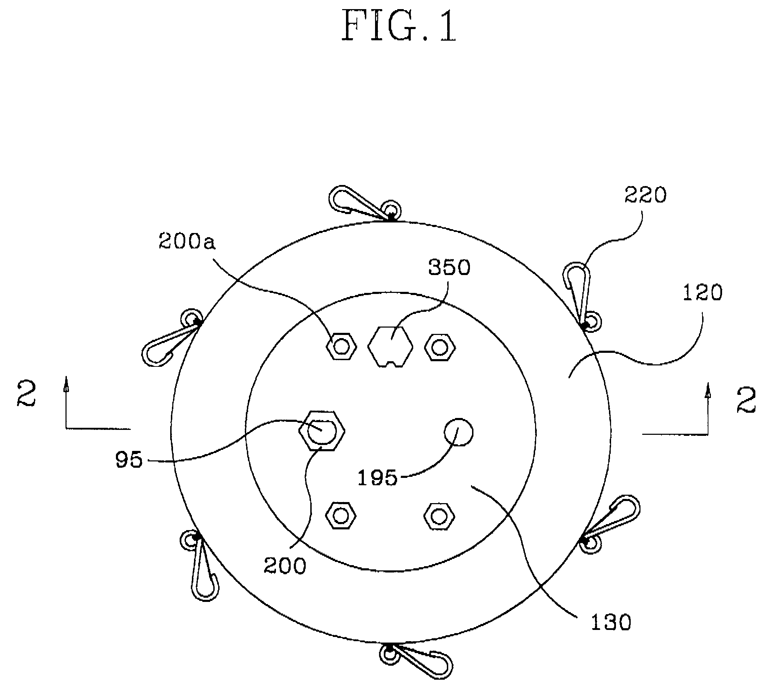

Fig. 1 shows an anti-skid device according to the present invention, in particular an apparatus for mounting a snow chain as a plan view, in which a plurality of pulling members are completely reeled into the apparatus and are respectively connected with a plurality of hook elements at a middle portion of the pulling members. This corresponds to when the mounting apparatus is not used.

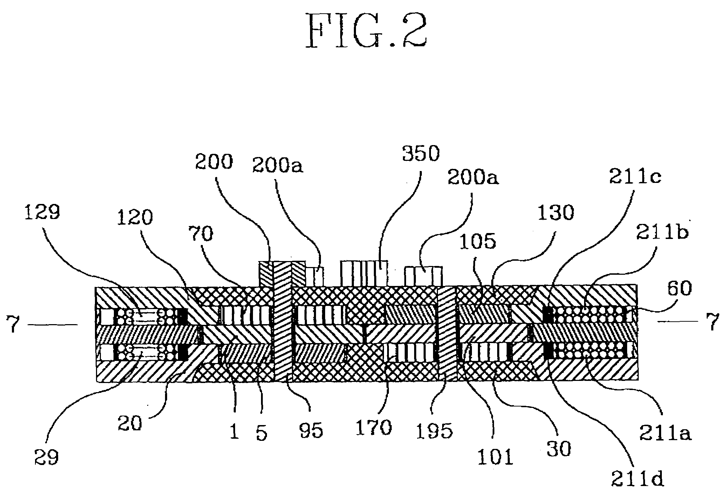

Fig. 2 shows a cross-sectional view taken on line 2-2 in Fig. 1. A first and second central gearing members or a first and second central gears 1 and 101 are externally engaged with each other on a flash plane so that the clockwise rotation of the first central gear 1 simultaneously results in the counter clockwise direction of the second central gear 101. Beneath the first central gear 1 is disposed a first gearing member or a first gear 5 which internally engages with a first winding gearing member or a first winding gear 20. On the first central gear 1 is disposed a resilient member or a first spiral spring 70 opposite to the first gear 5 at a same height. Beneath the second central gear 101 is disposed a resilient member or a second spiral spring 170 opposite to the first gear 5 on a flash plane. On the second central gear 101 is disposed another gearing member or a second gear 105 which internally engages with another winding gearing member or a second winding gear 120. On the first central gear 1 is disposed a first spiral spring 70 opposite to the second gear 105 at a same height. Except for the winding gears 20 and 120, the first gearing members and spring 1, 5; 70 are splined with a first shaft 95 passing through their central portions, while the second gearing members and spring 101, 105; 170 are also splined with a second shaft 195 passing through their central portions.

The first shaft 95 functions as a driving shaft, but a second shaft 195 functions as a driven shaft. Both ends of shafts 95 and 195 are supported by first and second covers 30 and 130 which are firmly clamped by bolts and nuts 200a. A thickness ratio of the covers 30 and 130 consists of three-fifths of the first cover 30 and two-fifths of the second cover 130, considering the entire thickness of the apparatus as one. In particular, this thickness ratio prevents the above-mentioned all gears from being pressed by clamping force applied when the apparatus for mounting the snow chain is assembled, and thereby facilitate the gears to rotate. Alternatively, the thickness may be selected at a ratio of one half of the first cover and one half of the second cover, or two-fifths of the first cover and three-fifths of the second gear.

A plurality of pulling members have a continuous line shape comprising lower pulling members 211a whose ends 211d are secured to the first winding gear 20 and upper pulling members 211b whose ends 211c are secured to the second winding gear 120. The both ends of the pulling members are greater than the body in a cross-sectional dimensions. To receive the respective end of the pulling members the first and second winding gears 20 and 120 are formed in a step shape, and the step is provided with a plurality of apertures 28 and 128 having a slit at same intervals along the steps. The apertures 28 and 128 are formed in such a manner that the body portion of the pulling member is allowed to come out through the slit but the end portion is not permitted to come out.

In accordance with the above mentioned construction, once a manual driving member 200 mounted on the top portion of the first shaft 95 begins to rotate clockwise by a tool such as a box spanner, a plurality of members splined with the first shaft 95, i.e. the first spring 70, the first central gear 1 and the first gear 5 are rotated in the same direction, and thus first winding gear 20 engaged with the first gear 5 and the lower pulling member 211a connected with the first winding gear 20 are rotated in the same direction. However the central gear 101 engaged with the first central gear 1 can rotate counter clockwise together with the second shaft 195, the second spring 170, the second gear 105, the winding gear 120 and the upper pulling members 211b. These clockwise and counter clockwise rotating motions are carried out by the manual driving member 200 mounted on the top portion of the first shaft 95. Alternatively, the first central gear 1 may be integrated with the first gear 5, and the second central gear 101 may be integrated with the second gear 105 as well.

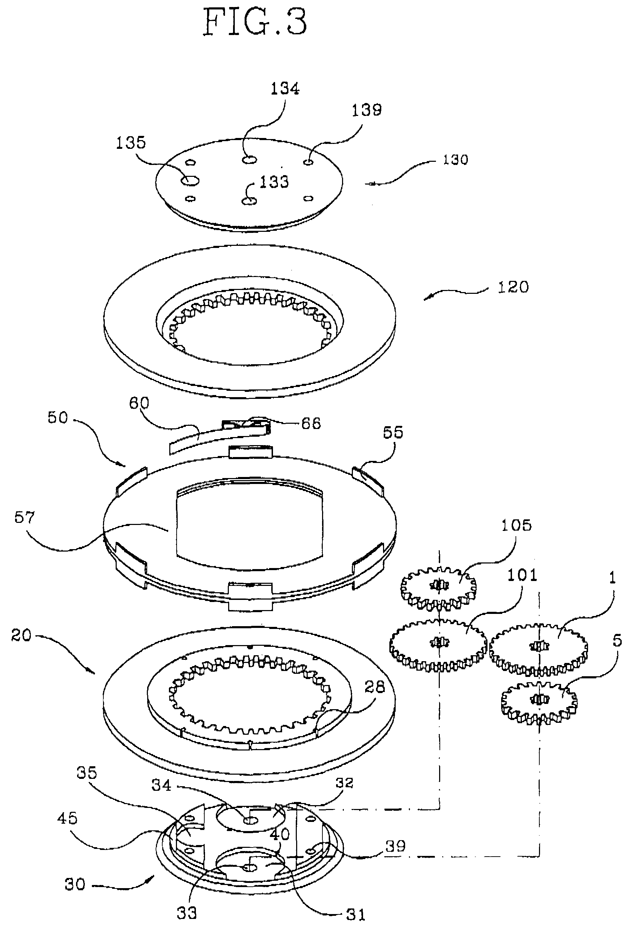

On the one hand, an apparatus for mounting a snow chain according to the present invention may be modified into a structure in which first and second central gears 1 and 101 are eliminated. At or opposite to the recess 35 of the first cover 30 in Fig. 3 may be disposed first and second side gearing members which are externally engaged with each other and have a geometrical shape corresponding to the first and second gears 5 and 105. The first side gearing member is engaged with the first gear 5, while the second side gearing member is engaged with the second gear 105. The side gearing member have an engaging portion substantially corresponding to the height which amounts to the engaging portion of the first gear 5 plus that of the second gear 105, i.e. twice the height of the engaging portion of the first gear 5 or 105.

Referring now to Fig. 3, a first cover 30 includes a first recess 31 for a first gear 5, a second recess 32 for a second spiral spring 170, a recess 35 for locking member 350 of the locking mechanism 300 defined at a position isolated perpendicular to the central line linking the center of the first recess 31 with the center of the second recess 32, an aperture 40 for the end of the second spiral spring 170 having a slit along the outer periphery of the second recess 32, and through hole 39 for clamping bolt.

The first cover 30 has a tapered surface sloped at a certain angle radially inwardly at its periphery and an arc-shaped step 45 apart from the tapered surface facing diametrically to the center line of the first and second recesses 31 and 32. The tapered surface is in contact with a tapered surface of the first winding gear 20 and has a function of preventing the deviation of the first winding gear 20. This is true for the second cover 130 as well.

On the outer surface of the first cover 30, there is provided with recesses (not shown) having such a shape that a clamping bolt is sufficiently received without protrusion of its head and do not have an idle motion on clamping. Alternatively, the recesses may have a little larger size to fasten the bolt together with a rubber plate. Such a rubber plate will have protection against damage to a hub cover surface of a vehicular wheel, in particular in a small size vehicle, which should be in contact with the first cover 30.

The second cover 130 includes a through hole 135 for the locking member 350, through holes 133 and 134 for supporting the one end of the first and second shafts, respectively and through hole 139 for the clamping bolt.

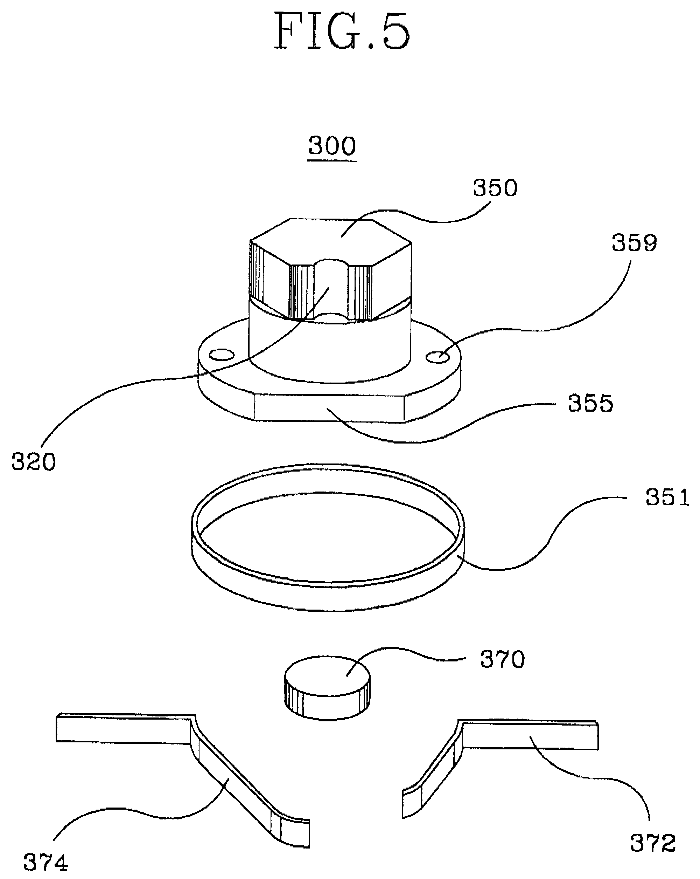

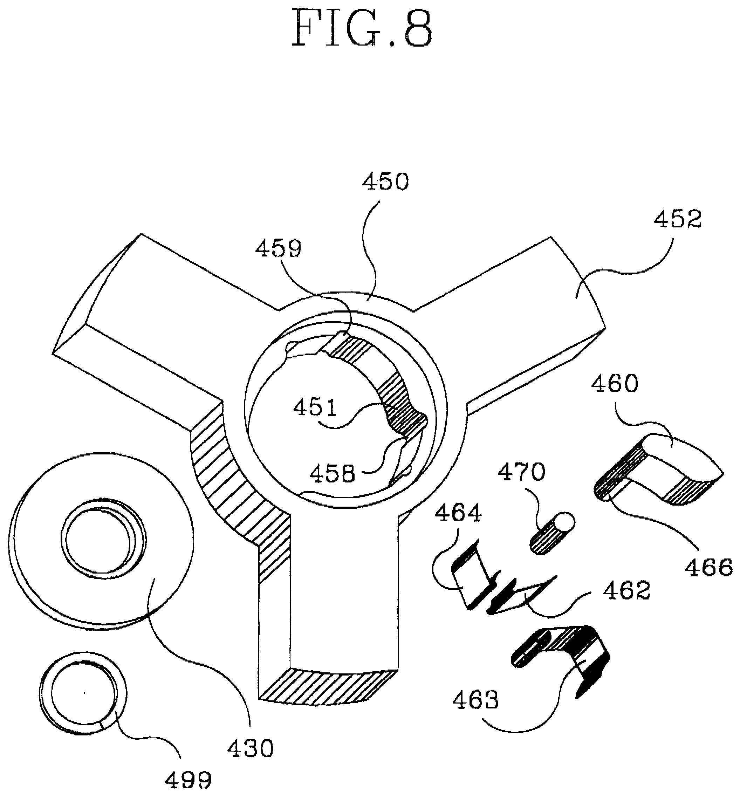

As seen from the shape of the locking member 350 in Fig. 5, the hole 135 of the second cover 130 has a diameter much smaller than that of the recess 35. As will be illustrated in reference to Fig. 8-10, around through hole 134 may be further defined at least one aperture at the same angle. Moreover the second cover 130 is also provided with recess (not shown) for a first spiral spring 70 and for a second gear 105 which has the same size and shape as the first cover 130.

Referring still to Fig. 3, there is a guide member 50 disposed between the winding gears 20 and 120, which includes a plurality of guide protrusions 55 aligned at the same angular distance and extending perpendicularly up and down from its outer periphery. A space defined between the protrusions 55 acts as a passage way through which the pulling members are guided. The member 50 has an arc shaped portion 57 placed on an arc-shaped step 45 of the first cover 30. As shown in Fig. 2, this guide member 50 and the winding gears 20 and 120 couple together and define receiving portions 29 and 129 for the pulling members. Furthermore, to help the pulling members to be reeled out of and into the receiving portions 29 and 129, there are provided a plurality of guide plates 60 of which one end is in contact with the pulling members and the other end is fitted and secured at the protrusions 55. In particular, the other end is provided with a bulging portion 66 functioning as a spring. The end contacting the pulling members presses against them so that they are reeled out of or into the receiving portions 29 and 129 without any looseness.

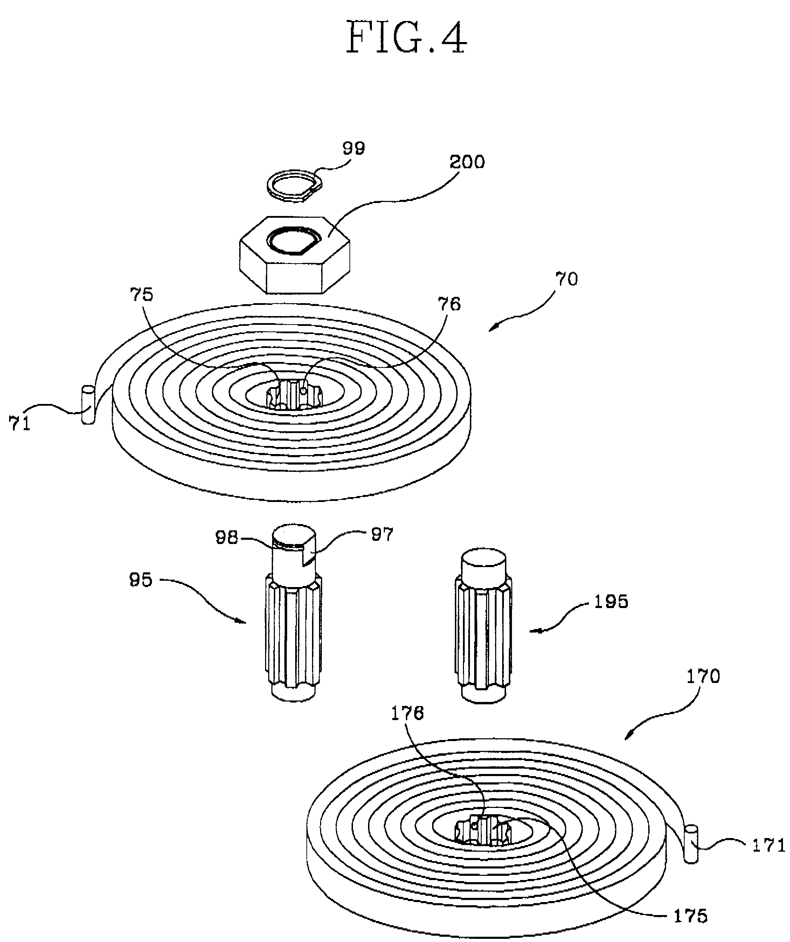

Referring to Fig. 4, there are shown first and second spline shafts 95 and 195, a manual driving member 200 mounted on the top portion of the shaft 95 and first and second spiral springs 70 and 170 splined with the shafts, respectively.

The top portion of the first shaft 95 is provided with a groove 98 fitted with snap ring 99 to prevent the manual driving member 200 from running away. The inner circumferential surface of the driving member is defined in the same shape as the top portion of the shaft 95 to prevent idle rotation when the driving member is driven with a tool such as box spanner. For the sake of this, the top portion of the shaft 95 is partially cut out at its periphery to form a cut-out 97.

The first spiral spring 70 has the same shape as the second spiral spring 170. The spring 70 has one end 71 fitted into an aperture 40 in the first cover 30 and the other end portion 75 or a central portion splined with the spline shaft 95. The central portion 75 is press-formed in the same shape as the spline shaft, and then bonded together with bonding means 76 such as rivet. This is true of the second spiral spring 170. Such a spline shape facilitates mounting the spiral spring on the spline shaft. On assembling a mounting apparatus for a snow chain, the first spring 70 is arranged to produce resilient force clockwise. on the contrary, the second spring 170 is arranged to produce resilient force counter clockwise. In particular, these spiral springs should be arranged so as to not produce any resilient force when the pulling members are fully received in the receiving portion 29 and 129 as shown in Fig. 2.

According to the present invention, alternatively the spline shaft may be selected to have a non-circular cross-sectional shape, such as pentagon, hexagon etc. The members splined with the spline shaft, more particularly the first and second central gears 1 and 101, the first and second gears 5 and 105 and the central portions 75 and 175 of the spiral springs may be of the cross-sectional shape corresponding to that of the shaft because this non-circular cross-sectional shape is adapted to simultaneously rotate with the shaft.

Referring now to Fig. 5, a locking mechanism 300 for preventing the above-mentioned members from rotating in reverse is schematically shown as an exploded perspective view. The means 300, from top to bottom, comprises a locking member 350, an annular band spring 351, a cylindrical bearing 370 and band springs 372 and 374.

The locking member 350 is divided into three portions, i.e. a lower portion inserted into the recess 35 of the first cover 30, a middle portion inserted through the through hole 135 of the second cover 130 and an upper portion having a shape adapted to make use of a tool such as a box spanner. The lower portion has a plane 355 partially cut out at its outer periphery and a concave semi-sphere 359 used to secure a locking or unlocking position by pressing on a ball bearing (not shown). The upper portion has a semi-cylindrical groove 320 at the same side surface as the plane 355 of the lower portion. The groove 320 is adapted to look at whether the locking member 350 takes a locking position or a unlocking position. The lower portion of the locking member 350 has an outer diameter similar to an inner diameter of the annular band spring 351. The outer diameter of the annular band spring 351 is nearly the same as the diameter of the recess 35 of the first cover 30. Therefore into the recess 35 of the first cover 30 is inserted the band spring 351 and the lower portion of the locking member in turn.

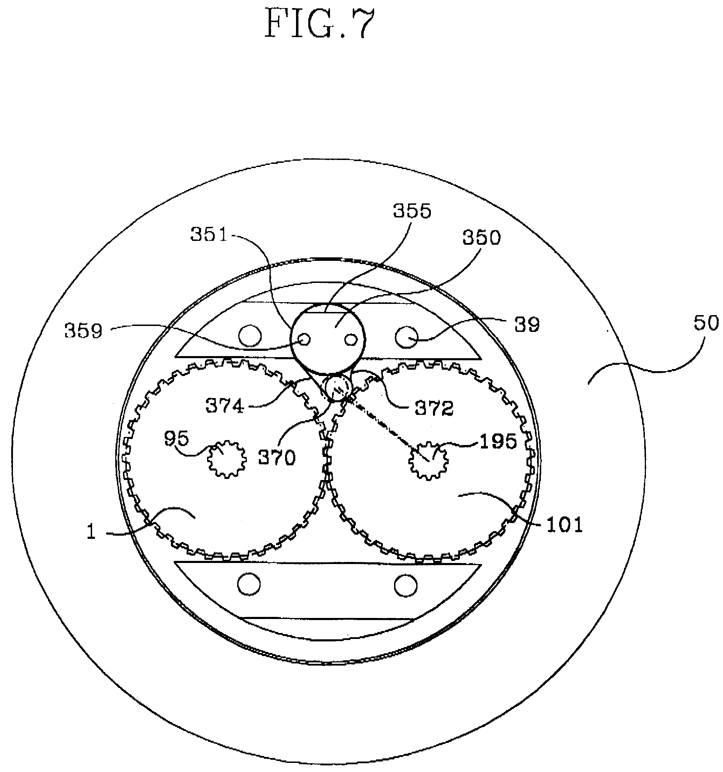

The annular band spring 351 functions as a sliding bearing decreasing the friction produced between an outer periphery of the lower portion of the locking member and an inner periphery of the recess 35. Other band springs 372 and 374 for preventing the bearing 370 from deviating from its original position have one end secured to a stepped surface adjacent to the recess 35 and the other end supporting the bearing 370 by contact. The portion contacting the bearing 370 may be selected to have a magnetic force. The further details of the above-mentioned locking mechanism 300 will be explained in reference to Fig. 7.

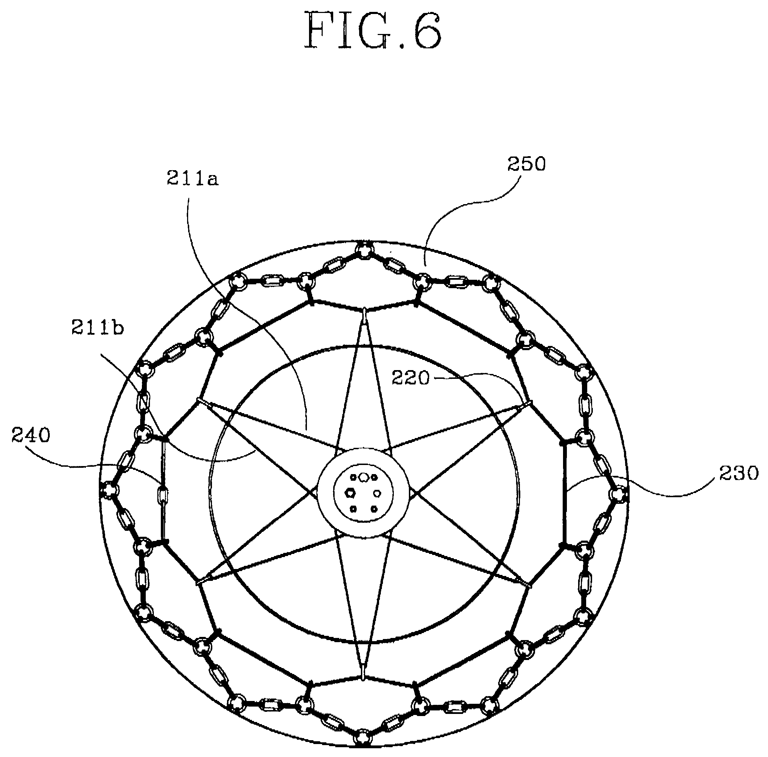

Fig. 6 shows a snow chain and an apparatus for the chain mounted to an outer circumferential portion of a vehicular wheel, i.e. to a tire 250. As for the snow chain used in the present invention, it is desirable to select a polymer chain rather than a steel chain, because the former has a better capability than the latter to withstand a heavy load. The snow chain in the present invention will be made use of with a continuous cable 230 which has a desired diameter and a length shorter than that of an outer periphery of tire to be mounted. Moreover the chain has generally a width greater than a contacting surface which a tire contacts with the roadway and a length slightly longer than that of a circumferential portion of the tire. Owing to this dimensions the cable 230 is linked to become smaller than the diameter of the tire by means of a suitable linking means 240. This linking manner is also applied to the opposite side of the above-mentioned tire. As a result, the tire 250 is surrounded with the snow chain.

As shown in Fig. 6, a plurality of hook elements 220 is coupled to the snow chain at predetermined intervals along the side of the tire in a detachable manner but coupled to a plurality of pulling members 211a and 211b in a non-detachable manner. Of the pulling members respectively coupled to the hook elements one end is connected with a first winding gear 20 and the other end is connected with a second wind gear 120. Therefore a clockwise and a counter clockwise rotations of the winding gears cause tension to be applied to the pulling members simultaneously by drawing the pulling members or to be released from the pulling members by unwinding them. To apply and release this tension is controlled by the locking mechanism 300. Furthermore, when the applied tension is released, a mounting apparatus for a snow chain according to the present invention avoids springing out suddenly by the both rotating direction of the pulling members. The tension applied to the pulling members to draw the snow chain is automatically obtained by spiral springs 70 and 170 in part, and a remaining tension is manually obtained by a spanner. This results from the fact that if the hook elements are coupled to the chain at a desired position, the pulling members force the spiral springs 70 and 170 to produce a recovery force by reeling out of the receiving portions 29 and 129 of the winding gears, because the springs 70 and 170 are initially provided in a condition that it does not have any recovery force. In particular, the tension applied by the tool is never released as long as the locking mechanism 300 is not operated in an unlocking condition. Moreover the pulling members draw the hook elements 220 towards the rotating axis of the vehicular wheel in a clockwise and count clockwise direction. These pulling members 211a and 211b have a circular or rectangular cross section braided or textured by a plurality of strands of aluminum alloy, steel, reinforced fiber etc. The pulling members have also both ends greater than the body in a cross-sectional dimensions.

Fig. 7 shows a cross-sectional view for explaining how the locking mechanism 300 used in an apparatus for mounting a snow chain according to the present invention effects locking and unlocking operation and is taken on the line 7-7 in Fig. 2 for its understanding.

When a plane 355 of the lower portion of the locking member 350 takes up the farthest position from a bearing 370, that is, a locking position, a clockwise motion that a manual driving member 200 on the top of the first shaft 95 is carried out by a box spanner causes the first central gear 1 splined with the first shaft 95 to rotate clockwise, and thus the second central gear 101 externally engaged with the first gear 1 is rotated counter clockwise. On the other hand, a cylindrical bearing 370 contacting teeth of the second central gear 101 by means of band springs 372 and 374 rotates counter clockwise to slightly retreat clockwise by a contacting friction, and thereby is not in contact with the teeth of the second central gear 101 and immediately is in contact with them by a resilient force of the band spring 374. As a result, these contact and non-contact repeats between the bearing 370 and the teeth of the second central gear 101.

In contrast with above-mentioned explanation, when the first central gear 1 rotates counter clockwise but the second central gear 101 rotates clockwise, the bearing 370 proceeds slightly counter clockwise by a clockwise rotation of the second central gear 101, and then is jammed between the teeth of the second central gear 101 and band spring 351 supported by the lower portion of the locking member 350 and the second central gear 101 leads its rotation to be stopped. If the central gear 101 rotates counter clockwise, the above-mentioned contact and non-contact is repeated.

When the plane 355 of the locking member 350 occupies the nearest position from the bearing 370, that is an unlocking position, the first and second central gears 1 and 101 can rotate in any one of clockwise and counter clockwise direction. When the second central gear 101 rotates counter clockwise, the bearing 370 firmly contacting the teeth of the second central gear 101 retreats on the plane 355 to an extent that the second central gear 101 can rotates counter clockwise. At this time the retreated bearing returns back to be in contact with the teeth of the second central gear 101 by a resilient force of the annular band spring 351. Another band spring 374 confines the clockwise motion of the bearing 370 to a limited extent. If the second central gear 101 rotates clockwise, the bearing 370 slightly proceeds counter clockwise but retreats slightly on the plane 355 at the same time, and thus is in contact with the teeth of the second central gear 101 by means of a resilient force of the band spring 351. Another band spring 372 confines the counter clockwise motion of the bearing 370 to a restricted extent. As a result, the bearing 370 retreats slightly on the plane 355 by the clockwise or counter clockwise rotation of the second central gear 101 but is always in contact with the teeth of the second central gear 101 by the band springs 372, 373 and 374.

When the locking member 350 takes up a locking or unlocking position, a ball bearing (not shown) contacting a semi-spherical recess 359 acts to secure both positions. This is operated in a manner similar to a ball bearing mounted on a door handle. Alternatively, the locking mechanism 300 is constructed to cooperate with the first central gear 1.

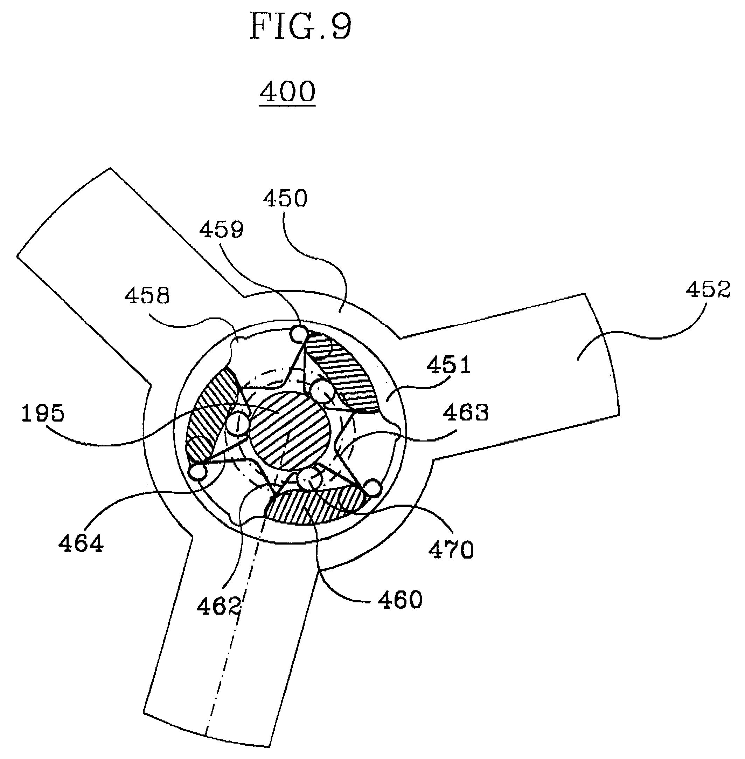

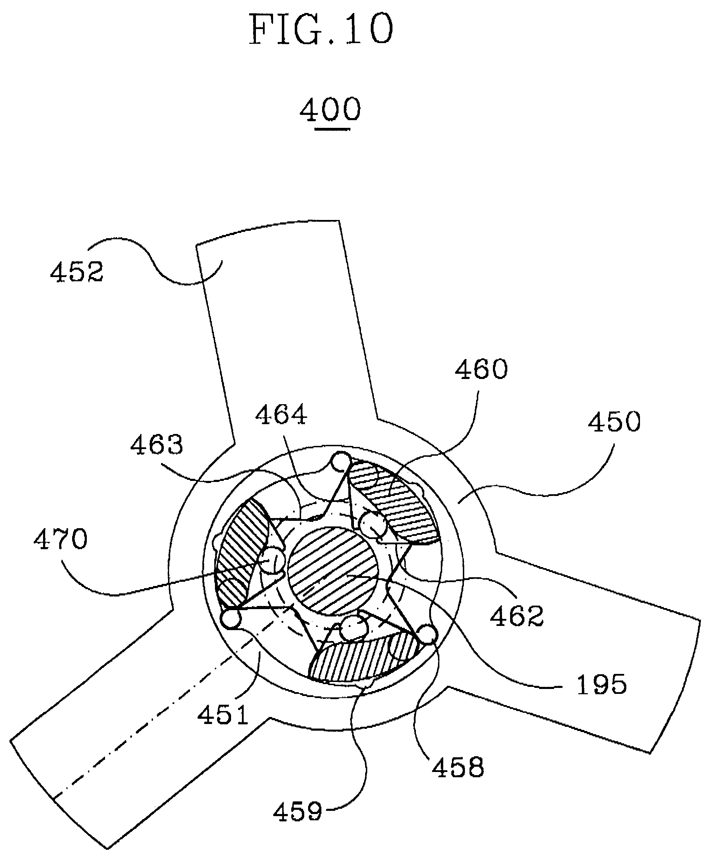

Fig. 8 shows an alternative embodiment 400 of the locking mechanism 300 in Fig. 5. The locking mechanism 400 in Fig. 9 and 10 illustrates as a plan view a locking and unlocking position, respectively. This locking mechanism 400 is mounted to cooperate with the second shaft 195 on an outer side of the second cover 130, while the means 300 in Fig. 5 is mounted between the first cover 30 and the second cover 130. Therefore to mount the locking mechanism 400 on the outer side of the second cover 130 the second shaft 195 shown in Fig. 4 requires at least one aperture defined around the through-hole 134 through which the end of the second shaft 195 passes. The second shaft 195 suitable for the locking mechanism 400 should include a circular cross-sectional top portion and a groove for a snap ring 499 similar to the groove 98 for the snap ring 99 fitted into the top portion of the first shaft 95.

As shown in Fig 9 and 10, bend springs 462 and 464 are respectively attached to both ends of a hinge member 460. A cylindrical bearing 470 is disposed between these band springs and between the shaft 195 and the hinge member 460 to contact one another. Another band spring 463 is attached to one end of the band spring 462 so that a locking member 450 takes up a locking position at one recess 459 and an unlocking position at the other recess 458. A bulging portion 451 of the locking member 450 has a similar profile to the side opposite to the side surface contacting the bearing 470 on the hinge member 460.

Referring now to the operation relationship of the locking mechanism 400, when the locking mechanism 400 takes up a locking position shown in Fig. 9, the second shaft 195 can rotate in one direction, that is, counter clockwise, because the bearing 470 is disposed between the locking member 460 and the shaft 195. In considering the rotation principles to assist in clear understanding of the invention, when the shaft 195 contacting the bearing 470 rotates counter clockwise, the bearing 470 is rotated in the reverse direction or clockwise by a frictional force resulting from the contact of the shaft 195, descending from a contacting surface on the locking member 460 with a rolling motion. On the contrary, when the shaft 195 rotates clockwise, the bearing 470 is rotated counter clockwise by a contacting frictional force, ascending along the contacting surface on the locking member 460 with a rolling motion, and thereby after moving at a certain distance is jammed between the contacting surface of the locking member 460 and the outer periphery of the shaft 195. As a result, the shaft 195 may rotate in one direction only.

On the other hand, when the locking mechanism 400 is in a unlocking position shown in Fig. 10, a spline shaft 195 can rotate in any one of clockwise and counter clockwise direction. When a locking member 450 moves around the shaft 195 towards the unlocking position at a certain angular distance, above-mentioned jammed bering 470 moves further along an outer periphery of the shaft 195 with a locking force gradually decreased. At this time a hinge member 460 pivots at a predetermined angle by its sliding motion with a bulging portion 451 of the locking member 450, and then the bearing 470 reaches a free position where no force is imparted. In this case, the bearing 470 can not deviate from the locking member 460, because it is resiliently supported between the two band springs 462 and 464. Although the bearing 470 leads to displacement due to the rotation of the shaft 195 on unlocking, it takes up its initial position again after such a displacement by the resilient force of the band spring 462.

On the other hand, when the locking member 450 has a sliding motion towards the locking position, the bearing 470 comes into contact with the shaft 195 by means of the resilient force of the band spring 462 before the locking member 450 takes up a final locking position, and then slides and descends from the bearing-side contacting surface of the hinge member 460 until the locking member 450 occupies its final locking position. This results from the resilient force of the band spring 462 causing the bearing 470 to contact the outer periphery of the shaft 195 before the locking member 450 takes up a final locking position.

When the locking member 450 displaces from the locking position to the unlocking position and vice versa, to maintain any one of these two positions the locking member 450 is provided with at least two longitudinal semi-circular grooves 458 and 459 which are defined on its inner periphery just adjacent to both ends of the bulging portion 451. The groove 458 is resiliently engaged with one end of a band spring 463. This band spring 463 is attached to the band spring 462 with a little resilient force applied. Owing to this resilient force, the spring 463 facilitates to disengage out of the groove 458 and to engage with another groove 459 when the locking member 450 moves between the locking position and the unlocking position. Alternatively, the locking mechanism 400 is mounted to cooperate with the first shaft 95. Finally, it is desirable for the apparatus for mounting the snow chain of the anti-skid device according to the invention to be manufactured by pressure die casting with an aluminum alloy or a reinforced plastic material in consideration of weight, environment and corrosion.

The principles of the present invention will now be apparent, and those skilled in the art may recognize other modifications or additions that may be employed without departing from the spirit of the invention. Accordingly, the scope of the invention should only be limited by a fair reading of the following claims and their equivalents.

## Claims

1. An apparatus for use in an anti-skid device including a snow chain disposed around an outer circumferential portion of a vehicular wheel, the apparatus comprising:
a plurality of hook elements coupled to the chain in a detachable manner;
a plurality of pulling members, connected with the hook elements in a non-detachable manner, for simultaneously drawing the hook elements towards the rotation axis of the wheel;
winding means, connected with the respective pulling members, for applying tension to the pulling members by its clockwise and counter clockwise rotations to draw the pulling members; and
locking mechanism, engaged with the winding means, operable to control the rotating direction of the winding means, for preventing the winding means from reverse rotating so that the applied tension is not released from the pulling members.

2. An apparatus according to claim 1, wherein the pulling members have a circular cross section braided by any one of a plurality of strands of aluminum alloy, steel and reinforced fiber, and have an end portion larger than a body portion in cross-sectional dimensions.

3. An apparatus according to claim 1, wherein the pulling members have a rectangular cross section textured by any one of a plurality of strands of aluminum alloy, steel and reinforced fiber, and have an end portion larger than a body portion in cross-sectional dimensions.

4. An apparatus according to claim 1, wherein the winding means comprises a first winding gearing member connected with one end of the pulling members and a second winding gearing member connected with the other end of the pulling members, and further comprises gearing means for simultaneously transmitting the rotating force of the first winding gearing member to the second winding gearing member.

5. An apparatus according to claim 4, wherein the gearing means comprises a first gearing member internally engaged with the first winding gearing member, a second gearing member internally engaged with the second winding gearing member, first and second central gearing members externally engaged with each other and disposed between the first gearing member and the second gearing member, a first shaft respectively fitted with the central portion of the first gearing member and of the first central gearing member, and a second shaft respectively fitted with the central portion of the second gearing member and of the second central gearing member.

6. An apparatus according to claim 5, wherein the first gearing member and the first central gearing member are formed in one-piece part, and the second gearing member and the second central gearing member are formed in one-piece part.

7. An apparatus according to claim 4, wherein the gearing means comprises a first gearing member internally engaged with the first winding gearing member, a second gearing member internally engaged with the second winding gearing member, first and second shafts respectively fitted with the central portions of the first gearing member and the second gearing member, a first side gearing member externally engaged with the first gearing member, and a second side gearing member externally engaged with the second gearing member, the first and second side gearing members being externally engaged with each other and having an engaging portion whose height is substantially the same as the height of an engaging portion of the first gearing member plus the height of an engaging portion of the second gearing member.

8. An apparatus according to claim 5, wherein the first and second shafts are supported at both ends by first and second covers, and a middle portion except for both ends is of non-circular shape.

9. An apparatus according to claim 8, wherein the first and second covers have respectively a thickness ratio from 2/5 to 3/5 of the entire thickness of the apparatus.

10. An apparatus according to claim 1, further comprising a resilient member for imparting a resilient recovery force to the winding means to rotate the winding means.

11. An apparatus according to claim 10, wherein the resilient member is a spiral spring having a central portion substantially corresponding to a profile of the shaft to cooperate with the shaft.

12. An apparatus according to claim 1, wherein the locking mechanism comprises a bearing engaged with any one of the first and second central gearing members and a locking member for moving the engaged bearing forward and backward by its rotation at a predetermined angle.

13. An apparatus according to claim 12, wherein the locking member comprises an identifying means by which its locking position or unlocking position is identified.

14. An apparatus according to claim 1, wherein the locking mechanism comprises at least one cylindrical bearing being in contact with an outer periphery of an upper end portion of the shaft, at least one hinge member being in contact with the bearing, a locking member, contacting the hinge member, for causing the hinge member to move forward or backward from the periphery of the shaft by a predetermined angular rotation, wherein the bearing is disposed between the shaft and the hinge member and is supported by band springs firmly attached at both ends of the hinge member, and the hinge member is disposed between the bearing and the locking member.

15. An apparatus according to claim 14, wherein the hinge member has a pivotable leg extending perpendicularly at one end and the leg is inserted into an aperture defined around a through hole for the shaft on the second cover at a constant interval.

16. An apparatus according to claim 5, further comprising a guide member arranged between the first and second winding gearing members, wherein the guide member has a plurality of protrusions vertically extending up and down from its outer periphery, and the pulling members are guided through a space defined between the protrusions.

17. An apparatus according to claim 16, wherein the guide member comprises a guide plate having one end pressing against the pulling member with a resilient force and the other end fitted into the protrusion.

18. An apparatus according to claim 17, wherein the guide plate has a bulging portion functioning as a spring.
